# EUROPEAN PATENT APPLICATION

(11) **EP 0 961 428 A2**
(43) Date of publication of application: **01.12.1999**
(21) Application number: 99401072.6
(22) Date of filing: 03.05.1999
(51) Int. Cl.: H04B 17/00

(54) **Method for controlling the end-to-end link quality in a telecomunications system**

(30) Priority: 27.05.1998 ES 9801111
(71) Applicant: ALCATEL, 75008 Paris (FR)
(72) Inventor: Del Cerro Hiniesto, Jose Luis, 28035 Madrid (ES); Castellano Zamora, Pablo, 28035 Madrid (ES)
(74) Representative: Feray, Valérie

(57) **Abstract**

Method for controlling the quality of a link channel set up by means of a telecommunications system (3) between a first subscriber terminal unit (1) and a second subscriber terminal unit (2). The transported data stream is organised in frames, the frames having an N+1 structure, that is, the first terminal unit (1), originator of the communication, adds a first byte for every N data bytes transported, so that the first byte, which includes a frame alignment signal and error indication codes, is transported by the telecommunications system (3) to a second terminal unit (2) without being used in a cyclic redundancy check procedure.

## Description

### OBJECT OF THE INVENTION

The present invention relates to a method for knowing the quality of a data and/or voice transmission line, set up between two subscriber terminal units that establish a communication by means of a telephone network, this having the task of transporting any kind of previously digitised information generated to and from the subscriber terminal units.

More specifically, the invention relates to the control of the quality of a link channel set up between two network terminal units for the interchange of all types of information, regardless of their nature (voice, data, images, television, etc.), which are connected to a digital data transmission network through an access node, respectively.

### STATE OF THE ART

With the liberalisation of telecommunications, new telecommunications companies have arisen in many countries, which have started providing services to their subscribers, offering them a broad range of services including both voice and non-voice services.

The communication between subscribers is established via a digital communications system that provides for the interchange of all types of information, and by means of which the subscriber is offered many services over a single subscriber line.

Thus, the subscriber gains access to many services over a single access line, and demands quality in the link channels set up through the digital transmission systems since, if the quality of the link is insufficient, for example faults arise in the communication that result in information loss, an operator's subscriber may opt to migrate to another operator who guarantees him better quality in the communication channels.

Therefore, both for an operator's subscribers as well as for the operator himself, it is important to have subscriber terminal equipments that provide information on the quality of a link channel set up with another subscriber, in order to know thereby, if a transmission fault occurs, where the error was produced, and thereby to issue the corresponding claim.

In this way, the telecommunications operators are obliged to supply, to their subscribers, subscriber terminal equipments capable of measuring the quality of the communication channel established between two subscribers. And, moreover, economically.

### CHARACTERISATION OF THE INVENTION

The main object of this invention is to provide a subscriber terminal unit with a method to determine the quality of a link channel set up with another subscriber terminal unit.

The subscriber terminal unit is normally connected to an access node of a digital communications system, which transports the traffic generated to and from the subscriber terminal units.

The method for controlling the end-to-end link quality of the invention is performed between a first subscriber terminal unit and a second subscriber terminal unit, which have established a communication or which are linked by a leased line, transporting the data traffic interchanged between the subscriber terminal units.

The first subscriber terminal unit adds a first byte for every N data bytes transported, forming an N+1 frame. In the first byte it includes a frame alignment signal and error indication codes. The frame so formed is transported over the digital communications system to the second terminal unit.

To test that the frames received by the second terminal unit do not have errors, a cyclic redundancy check-4 procedure is used, this calculation procedure being carried out on the N bytes of the N+1 frame. Consequently, the information content of the first byte does not enter into the calculation procedure.

Therefore, it is possible to know the operational quality of the link set up between the two subscribers, off-loading the management system of the digital telecommunications system of the quality calculation by spans; and the subscribers to the telecommunications system having a means whereby they can know the link operational quality.

### BRIEF DESCRIPTIONS OF THE FIGURES

A more detailed explanation of the invention is provided in the following description, based on the attached figures, in which:

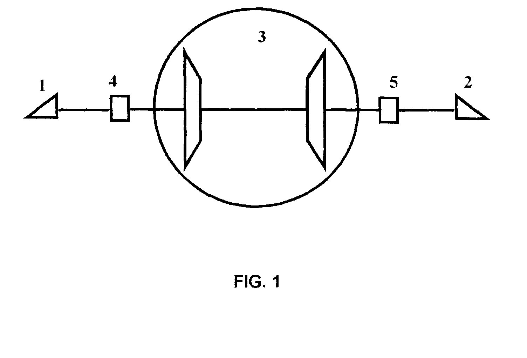

- figure 1 shows a block diagram of an embodiment of the invention.

### DESCRIPTION OF THE INVENTION

Referring to figure 1, the method of the present invention provides a first subscriber terminal unit 1 with a tool for determining the quality of a link channel established, by means of a digital communications system 3, with a second subscriber terminal unit 2.

The digital communications system 3 transports the traffic generated to and from the subscriber terminal units 1, 2, which are connected by permanent connections.

A subscriber has at least one subscriber terminal, which could be a computer, a data terminal, etc., which are connected to the first subscriber terminal unit 1. All these terminals together with the cabling network, to which the subscriber terminals are connected, constitute the subscriber installation.

Each subscriber terminal produces a data stream at a determined bit rate, depending on the type of service that said terminal provides. Thus, there are subscriber terminals that produce a data stream with a nominal bit rate of 64 kbit/s, for example.

The first subscriber terminal unit 1 has a set of n channels in order to communicate with the different types of equipment terminals connected to it, with the purpose of covering the services required by the subscribers.

Each subscriber terminal generates a data flow that is received by the first subscriber terminal unit 1 in order to be conditioned and sent as a data stream at n x 64 kbit/s over a leased line, for example, to a first access node 4 included within the digital communications system 3, which includes the equipments, for example multiplexers, switching matrices, etc., for completing the traffic transport of the subscribers.

Thus, one part of the traffic shall be transported to a second access node 5 in order to separate the traffic directed towards a subscriber terminal connected to the second terminal unit 2. Also, the connection between the second access node 5 and the second subscriber terminal 2 is formed by a leased line.

The access nodes 4, 5, respectively, use for transporting purposes data interfaces at 2048 kbit/s in accordance with the ITU-T Recommendation G.703, which admit bit rates of n x 64 kbit/s, for example.

The first terminal unit 1 structures the data flows received from the subscriber terminals so that the second terminal unit 2, located at the other end of the link, measures the quality with which the data stream generated at the first unit 1 arrives.

This latter unit 1 structures the data coming from the subscriber terminals into N bytes, and also adds a first byte whereby the frame adopts a structure of N+1 bytes. Consequently, the first terminal unit 1 adds a byte for every N data bytes. Therefore, the data stream sent by the first unit 1 to the first access node 4 has a bit rate of (N+1) x 64 kbit/s.

The frames so formed are grouped into sub-multiframes and these in turn into multiframes in order to be transported over the digital network 3.

The first terminal unit 1 introduces in the first byte information in order that the second terminal unit 2 can reconstitute the frame and the multiframe (frame alignment signal) and additional information that reflects the quality of the link channel employed, for example error indication codes.

Thus, in order to check that the received data stream does not contain errors (link operational quality) a cyclic redundancy check-4 (CRC-4) procedure is employed which is based on the ITU-T Recommendation G.704, whereby the structure of the frame and the structure of the submultiframe are similar to those of Recommendation G.704.

Nevertheless, the CRC-4 procedure calculation process is done every N x 8 data bits. Therefore, the quality is measured with the error indication codes.

The CRC-4 multiframe structure (refer to the table below) is divided into two eight-frame sub-multiframes SMFI and SMFII, the frames being numbered from 0 to 15. The frame alignment word is formed by the bits P0 to P6, these being programmable and taking a value that distinguishes them from the frame alignment word defined by the Recommendation G.704 and held in a channel time slot 0 (TSO).

The alignment word for the N+1 frame is transported over the digital network 3, as part of a data flow at 2048 kbit/s, without suffering changes since it is not identified with the frame alignment word of channel time slot 0, providing information on the end-to-end operational quality.

The allocation of bits 1 to 8 of the (N+1) frame is indicated in the following table:

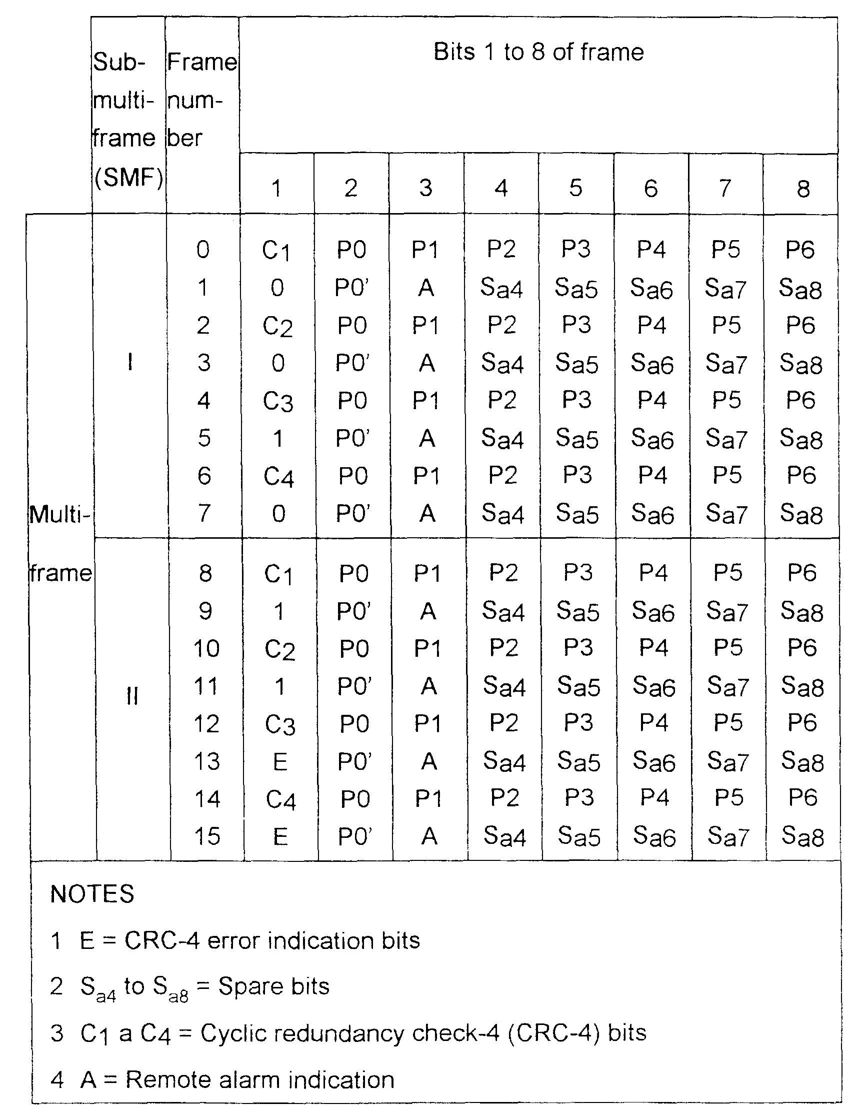

Bit P0' indicates a bit which takes the value opposite to that of bit P0. The bits Sₐ₄ to Sₐ₈ are additional spare bits, and bits E are also used in accordance with Recommendation G.704.

Thus, when the second subscriber terminal unit 2 detects a CRC-4 word with errors in the received data flow, it sets the corresponding bit E to value 0 in the multiframe that it transmits in the opposite direction, in this case towards the first terminal unit 1. Consequently, a subscriber can know, for both directions of transmission, the quality of the link set up with another subscriber terminal unit.

The information contained in the first byte of the data stream at (N+1)x64 kbit/s, is transported over the digital network 3 without the latter introducing changes in it, since if the digital network 3 should change it, then the second terminal unit 2 is unable to determine the quality of the link set up.

The first byte contains information similar to the information contained in channel time slot 0 (TS0) of a basic 2048 kbit/s frame structure, defined in the Recommendation G.704.

In contrast to channel time slot 0 of Recommendation G.704, the first byte added does not enter into the CRC-4 calculation. This permits the possibility of using the spare bits Sₐ₄ to Sₐ₈ for sending information, a service channel for example, between different points in the digital transport network 3 without affecting the CRC-4 bits, keeping intact the information on the quality between the ends of the link set up between the subscriber terminal units 1, 2.

In summary, by applying the method of the invention the operational quality, in both transmission directions, of a link channel set up between two terminal units by means of a digital telecommunications system is known off-loading the management system of the telecommunications system of the calculation of the operational quality by spans and providing the knowledge of the operational quality to the subscribers.

## Claims

1. **Method for controlling the end-to-end quality of a link** set up by means of a telecommunications system for transporting data organised into frames; **characterised** in that a first terminal unit (1) adds a first byte for every N bytes of said transported data forming an N+1 frame, wherein said first byte includes a frame alignment signal and error indication codes; said first byte being transported by said telecommunications system as part of said N+1 frame to a second terminal unit (2) and without being used in a cyclic redundancy check-4 (CRC-4) procedure.

2. **Method for controlling the quality** according to claim 1, **characterised** in that the calculation of said cyclic redundancy check-4 (CRC-4) procedure is done on said N data bytes.

3. **Subscriber terminal unit** connected to a telecommunications system to transport data organised into frames, **characterised** in that said subscriber terminal unit (1) includes means for adding a first byte for every N bytes forming an N+1 frame, and means for performing a cyclic redundancy check-4 (CRC-4) procedure on N data bytes received in an N+1 frame from said second subscriber terminal unit (2).
